# EUROPÄISCHE PATENTSCHRIFT

(11) **EP 4 048 194 B1**
(45) Veröffentlichungstag und Bekanntmachung des Hinweises auf die Patenterteilung: **07.08.2024**
(21) Anmeldenummer: 20804153.3
(22) Anmeldetag: 20.10.2020
(51) Int. Cl.: A61C 13/20, A61C 13/00, A61C 5/77, B33Y 80/00

(54) **VERFAHREN ZUR HERSTELLUNG VON FORMTEILEN, INSBESONDERE ZAHNMEDIZINISCHEN FORMTEILEN**
METHOD FOR PRODUCING MOULDED PARTS, IN PARTICULAR DENTAL MOULDED PARTS
PROCÉDÉ DE RÉALISATION DE PIÈCES MOULÉES, NOTAMMENT DE PIÈCES MOULÉES UTILISÉES EN MÉDECINE DENTAIRE

(30) Priorität: 21.10.2019 DE 102019128336
(43) Veröffentlichungstag der Anmeldung: 31.08.2022
(73) Patentinhaber: WDT-Wolz-Dental-Technik GmbH, 55566 Bad Sobernheim (DE)
(72) Erfinder: WOLZ, Stefan, 55566 Bad Sobernheim (DE)
(74) Vertreter: Götz, Gudrun Veronika
(86) Internationale Anmeldenummer: PCT/EP2020/079503
(87) Internationale Veröffentlichungsnummer: WO 2021/078742

(56) Entgegenhaltungen:
- US-A1- 2005 023 710
- US-A1- 2012 139 142
- US-A1- 2018 009 032

## Beschreibung

Die Erfindung betrifft ein Verfahren gemäß Anspruch 1.

Die Herstellung von Formteilen anhand computergestützter Verfahren (CAD/CAM) ist aus einer Vielzahl technischer Gebiete bekannt. Auch zahnmedizinische Formteile, insbesondere Zahnersatz, wie Kronen und Brücken, aber auch Zahnimplantate und Prothesen oder für die Kieferorthopädie relevante Teile, wie Brackets werden durch computergestützte Verfahren (CAD/CAM) bereits in vielen Zahnarztpraxen und Zahnlabors hergestellt. Hierbei wird zunächst ein digitales, räumliches Modell des Mundraums eines Patienten erstellt. Der benötigte Zahnersatz wird mithilfe einer Software geplant und der erstellte Datensatz beispielsweise an eine Fräsmaschine übermittelt, die den fertigen Zahnersatz aus einem Rohling herausfräst. Die Rohlinge werden üblicherweise nach einem Kaltgussverfahren hergestellt, bei welchem zunächst eine Anmischmasse aus einem für die Dentaltechnik geeigneten Keramikpulver oder Metallpulver hergestellt wird. Als Anmischmasse kann bspw. eine pastöse Masse, ein Schlicker, eine Suspension oder auch eine "trockene" Pulverschüttung verwendet werden. Ein Verfahren zur Herstellung von Zahnersatz aus Dentalmetallpulver ist aus der EP 2 470 113 B1 bekannt. Hierbei wird ein CrCo-Dentalmetallpulver zu einem Schlicker angerührt, kalt in eine Gussform eingefüllt und in dieser getrocknet. Ein dem Schlicker zugesetztes Bindemittel verleiht nach der Trocknung eine ausreichende Formfestigkeit, sodass der getrocknete Schlicker als Grünling aus der Kaltgussform entnommen und anhand des übermittelten, digitalen Datensatzes mittels der Fräsmaschine in die gewünschte Raumform gefräst wird. Durch abschließendes (Dicht)-Sintern erhält der Zahnersatz die erforderliche Härte und Dichte. Erforderliche Materialeigenschaften zur Zulassung als zahnmedizinische Formteile sind anhand nationaler und/oder internationaler Normen fest definiert. Derlei Kaltgussverfahren eignen sich lediglich zur Herstellung von Rohlingen. Die feinen, komplexen Formen des eigentlichen Zahnersatzes werden anschließend durch spanabhebende Bearbeitung aus dem Rohling herausgefräst. Lehren zu Metall- oder Keramikschlickern für die Dentaltechnik sind Stand der Technik und bspw. in den Druckschriften EP1658018 B1, EP1047355 B1, WO 2013007684 A, EP1558170 B1 und EP1885278 B1 zu finden, Informationen zu deren Konditionierung können den Druckschriften DE 10 2005 023 727 B4 und DE19801534 A1 entnommen werden. Auch die Durchführung des abschließenden Dicht- oder Endsinterns ist hinreichend im Stand der Technik beschrieben, entsprechende Verfahren und Sinteröfen können der EP 2765950 B1, EP 2844412 A1, WO2011020688 A1 entnommen werden.

Bei der Verwendung von Pulverschüttungen als Anmischmasse ist zur Erlangung einer ausreichenden Formfestigkeit, üblicherweise ein zusätzlicher Arbeitsschritt, die Durchführung eines isostatischen Pressens, erforderlich. Hierbei wird die Anmischmasse von allen Seiten gleichmäßig mit hohem Druck beaufschlagt. Entsprechende Verfahren zur Herstellung von keramischem Zahnersatz aus Keramikpulvern, bspw. Zirkonoxid, sind ebenfalls hinreichend aus dem Stand der Technik bekannt. Ein Verfahren, bei dem Zahnteile aus Keramikpulver hergestellt werden ist in der WO 2008/114 142 A1 beschrieben.

US 2012/139142 offenbart auch ein weiteres Beispiel für ein Verfahren zur Herstellung einer Zahnrestauration.

Das digitale, räumliche Modell des Mundraums wird auch für die Herstellung von Provisorien aus Kunststoff verwendet. Hierbei wird der für den Zahnersatz erstellte Datensatz an einen 3D-Drucker weitergeleitet, der das Provisorium mittels eines additiven Materialaufbauverfahrens (3D-Druck) schichtweise aus Kunststoff-Ausgangsmaterial aufbaut.

Mittlerweile können im Gebiet der additiven Materialaufbauverfahren neben Kunststoffen aber auch anorganische Stoffe als Ausgangsmaterial dienen. Bekannt sind additive Materialaufbauverfahren wie SLM (selektives Laserschmelzen), Extrusionsverfahren, wie FDM (Fused Deposition Molding) und FFF (Fused Filament Fabrication). Ebenfalls sind additive Materialaufbauverfahren, die die Lichthärteeigenschaften der Ausgangsstoffe nutzen bekannt, wie z. B.: SLA bzw. STL (Stereolithographie), DLP (Digital Light Processing), LCM (Lithography-based Ceramic Manufacturing).

Auch zur Herstellung von Zahnersatz aus Metall oder Keramik, mittels additiver Materialaufbauverfahren gibt es daher bereits erste Versuche. Ein Verfahren, bei dem eine Zahnkrone mittels eines additiven Materialaufbauverfahrens aus Zirkonia hergestellt wird, ist aus der WO2018/065856 A1 bekannt. Allerdings sind 3D-Drucker für Metall- oder Keramikobjekte sehr teuer und/oder das gedruckte Formteil erfüllt nicht die hohen Materialanforderungen, um zur zahnmedizinischen Nutzung zugelassen zu werden. Insbesondere wird für additive Materialaufbauverfahren ein sehr hoher Bindemittelanteil im Ausgangsmaterial (ca. 30%) benötigt, weshalb die geforderte Enddichte bzw. Endhärte nicht oder äußerst aufwendig zu erreichen ist. Eine wirtschaftliche Umsetzung des Druckens von zahnmedizinischen Formteilen aus Keramik oder Metall ist nicht in Sicht.

Eine andere Möglichkeit, bei der die digitalen, räumlichen Daten des Mundraums zur Herstellung komplex geformter und dichtgesinterter Zahnersatzteile mit einem 3D-Drucker genutzt werden sollen, offenbart die WO 2019/210285 A2. Hierzu soll nicht der Zahnersatz, sondern eine sich selbst zerstörende Gussform mittels eines 3D-Druckers gedruckt werden. Als Ausgangsmaterial für den Druckvorgang wird eine Pulvermischung aus zwei Komponenten, einem sinterfähigen Aluminapulver und einem pulverförmigen Bindemittel mit hohem Wärmeausdehnungskoeffizienten (WAK) verwendet. Die gedruckte Gussform wird mit einer sinterfähigen, trockenen Zirkoniapulverschüttung als Anmischmasse befüllt. Anschließend wird die Gussform mit einem aus demselben Material gedruckten Deckel verschlossen, um die (zweiteilige) Gussform zusammen mit der darin befindlichen Zirkoniapulverschüttung isostatisch bei einem Druck von 400 MPa zu pressen. Ausschlaggebend ist bei diesem Verfahren, dass die Pulverschüttung frei von Bindemitteln ist, um eine gleichmäßige Pressung zu ermöglichen. Die Pulverschüttung wird gemeinsam mit der Gussform verdichtet und anschießend, ohne die Gussform zu entfernen, gesintert. Beim Sintern dehnen sich die in der Gussform enthaltenen Bindemittel aus, wodurch die Gussform aufplatzt. Damit sich das fertig gesinterte Formteil von der Gussform löst, muss die Sintertemperatur der Gussform höher sein als die Sintertemperatur der Pulverschüttung. Nachteilig an dem offenbarten Verfahren sind einerseits die hohen Kosten, die mit dem 3D-Druck des keramischen Ausgangsmaterials sowie dem isostatischen Pressen bei extrem hohen Drücken von 400 MPa verbunden sind. Die Verwendung eines keramischen Ausgangsmaterials, mit einer Sintertemperatur höher als die der Pulverschüttung, ist für das beschriebene Verfahren aber maßgeblich. Andererseits sind auch die Einsatzmöglichkeiten des Verfahrens begrenzt. Die verwendete Anmischmasse muss frei von Bindemitteln sein, um eine gleichmäßige Pressung zu erreichen. Darüber hinaus eignen sich verdichtende Pressverfahren, gerade das isostatische Pressen, bei welchem der Druck von allen Seiten gleichmäßig auf das Formteil einwirken soll, nicht für Anmischmassen, deren Feuchtegehalt mehr als 7% beträgt. Flüssigkeiten sind nahezu inkompressibel. Zur Durchführung des isostatischen Pressens ist es erforderlich, die Pulverschüttung vollständig innerhalb der mit dem Deckel verschlossenen Gussform einzuschließen. Aus diesem Grund kann etwaige in der Anmischmasse enthaltene Feuchtigkeit nicht entweichen.

Aufgabe der vorliegenden Erfindung ist es daher, eine additiv aufgebaute, insbesondere 3D-gedruckte Kaltgussform bereitzustellen, die eine gegenüber dem Stand der Technik kostengünstigere und massentauglichere Herstellung von zahnmedizinischen Formteilen mit komplizierten anatomischen Formen, wie bei Kronen, Brücken, Kieferimplantaten, Abutments, Prothesen usw. ermöglicht. Gleichzeitig sollen die Einsatzmöglichkeiten erweitert werden. Insbesondere wird die Verwendung unterschiedlichster Anmischmassen aus sinterfähigen, metallischen und/oder keramischen Werkstoffen entweder in trockener Pulverform oder als Schlicker, Suspension oder pastöse Masse ermöglicht.

Die Aufgabe wird gelöst durch ein Verfahren zur Herstellung eines zahnmedizinischen Formteils gemäß Anspruch 1.

Ein Verfahren zur Herstellung eines Formteils, insbesondere eines zahnmedizinischen Formteils der eingangs näher beschriebenen Art kennzeichnet sich durch die folgenden Verfahrensschritte:
- Befüllen der Kavität der Kaltgussform über die mindestens eine Öffnung mit der sinterfähigen Anmischmasse,
- Aushärten und/oder Verfestigen der sinterfähigen Anmischmasse in der Kavität der Kaltgussform, wobei in der sinterfähigen Anmischmasse enthaltene und/oder eingeschlossene Gase und/oder Flüssigkeiten über die mindestens eine Öffnung aus der Kavität ausgeleitet werden,
- thermisches und/oder thermochemisches Zersetzen der Kaltgussform bei einer Temperatur in einem Temperaturbereich von 200°C bis 2500°C,
- Sintern der sinterfähigen Anmischmasse auf Endhärte bei einer Temperatur in einem Temperaturbereich von 900°C bis 2500°C, bis ein Formteil, insbesondere ein zahnmedizinisches Formteil, wie ein Zahnersatz erhalten wird.

Erfindungsgemäß ist also vorgesehen, zur Herstellung von Formteilen, insbesondere zahnmedizinischen Formteilen eine additiv aufgebaute, insbesondere 3-D gedruckte, und vorzugsweise einstückige Kaltgussform zu verwenden, die sich vorzugsweise in einem Arbeitsschritt, beim Sintern der Anmischmasse zum fertigen Formteil, insbesondere zahnmedizinischen Formteil, thermisch oder thermochemisch, durch Pyrolyse oder Verbrennung zersetzen oder Auflösen lässt. Auf diese Weise lässt sich eine Beschädigung des, oftmals filigrane Strukturen mit geringen Wandstärken aufweisenden, zahnmedizinischen Formteils durch Aufbrechen oder Aufplatzen der Kaltgussform oder sonstige Krafteinwirkung auf diese vermeiden. Nach Abschluss des Sinterns ist die Kaltgussform thermisch oder thermochemisch vollständig oder nahezu vollständig zersetzt, sodass ein zusätzlicher Arbeitsschritt, bei dem Kaltgussform und Formteil voneinander getrennt werden müssten vermieden wird.

Nach dem erfindungsgemäßen Verfahren wird die Kavität der Kaltgussform, vorzugsweise im Anschluss an deren Fertigstellung mit der sinterfähigen Anmischmasse, wahlweise unter Druckeinwirkung, befüllt und härtet in der Kaltgussform aus bzw. verfestigt sich in deren Inneren. Insbesondere bei der Befüllung und/oder beim Aushärten bzw. Verfestigen, aber auch während des gesamten Verfahrensablaufs können in der Anmischmasse enthaltene und/oder eingeschlossene Gase und/oder Flüssigkeiten, über die mindestens eine Öffnung aus der Kavität ausgeleitet werden oder entweichen. Zweckmäßigerweise verbleibt die mindestens eine Öffnung ebenfalls während des gesamten Verfahrensablaufs hierzu unverschlossen bzw. geöffnet.

Die thermische und/oder thermochemische Zersetzung der Kaltgussform kann bereits während des Aushärtens bzw. Verfestigens der Anmischmasse, oder wahlweise auch erst nachdem die Anmischmasse vollständig, insbesondere auf Grünlingshärte, ausgehärtet ist eingeleitet werden. Vorzugsweise beginnt die Zersetzung in einem Temperaturbereich von 200°C bis 650°C und wird beim abschließenden Sintern bei einer Temperatur in einem Temperaturbereich von 900°C bis 2500°C abgeschlossen. Die Aushärtung bzw. Verfestigung der Anmischmasse in der Kavität kann auf unterschiedliche Weise, insbesondere durch chemische Reaktion erfolgen. Die chemische Reaktion kann insbesondere mittels eines Bindemittels oder Zweikomponenten-Bindemittels realisiert werden. Je nach Wahl des Bindemittels kann die Reaktion durch unterschiedliche Auslöser, bspw. durch Bestrahlung mit einer Lichtquelle, insbesondere UV-Quelle, durch Wärmeeinwirkung, durch Feuchtigkeitsentzug usw. gestartet werden.

Nach einer vorteilhaften Verfahrensvariante liegt die Anmischmasse als Schlicker und/oder pastöse Masse vor und umfasst ein Verdünnungsmittel, insbesondere Wasser, wobei die Anmischmasse in der Kavität der Kaltgussform durch Trocknung aushärtet und/oder sich verfestigt und ein Flüssigkeitsanteil und/oder Feuchtigkeitsgehalt der Anmischmasse mittels der mindestens einen Öffnung aus der Kaltgussform ausgeleitet, insbesondere der Anmischmasse entzogen wird.

Besonders bei der Verwendung von Schlickern oder feuchten/pastösen Massen als Anmischmasse, aber auch für Pulverschüttungen wird die Kaltgussform nach dem erfindungsgemäßen Verfahren mit mindestens einer, in die Kavität mündenden und/oder aus der Kavität führenden, ersten Öffnung und mit mindestens einer in die Kavität mündenden und/oder aus der Kavität führenden zweiten Öffnung additiv aufgebaut, wobei die Kavität der Kaltgussform über die erste Öffnung befüllt wird und in der sinterfähigen Anmischmasse enthaltene und/oder eingeschlossene Gase, insbesondere Lufteinschlüsse, und/oder Flüssigkeiten, insbesondere Verdünnungsmittel, über die zweite Öffnung aus der Kavität ausgeleitet werden.

Zusätzlich zu der mindestens einen ersten Öffnung, die zur Befüllung der Kavität mit der Anmischmasse vorgesehen ist, ist erfindungsgemäß eine zweite Öffnung ausgebildet, die dann zum Ausleiten von in der Anmischmasse enthaltener Fluiden vorgesehen ist. Grundsätzlich ist es denkbar, die erste Öffnung und/oder die zweite Öffnung auszubilden, insbesondere zu bohren, nachdem der additive Aufbau der Kaltgussform abgeschlossen ist. Vorteilhaft ist es aber, die erste Öffnung und/oder die zweite Öffnung direkt während des additiven Materialaufbaus auszubilden, sodass ein zusätzlicher Arbeitsschritt vermieden wird. Durch die Ausbildung der mindestens einen, zweiten Öffnung kann die nach dem erfindungsgemäßen Verfahren additiv aufgebaute Kaltgussform nicht nur für Anmischmasse mit beliebigem Feuchtegehalt verwendet werden, die mindestens eine, zweite Öffnung erlaubt auch eine Entlüftung bei der Verwendung einer Pulverschüttung, die beispielsweise durch Rütteln unterstützt werden kann. In Weiterbildung dieser Ausgestaltung wird mindestens eine, die Kavität begrenzende Wandung der Kaltgussform vollständig oder bereichsweise mit einer Vielzahl an in die Kavität mündenden und/oder aus der Kavität führenden und diese Wandung durchsetzenden, zweiten Öffnungen zum Ausleiten von Gasen, insbesondere Lufteinschlüssen und/oder Flüssigkeiten, insbesondere Verdünnungsmitteln additiv aufgebaut.

Indem eine oder mehrere Wandungen der Kaltgussform mit einer Vielzahl, zueinander benachbarter, zweiter Öffnungen durchsetzt wird, lässt sich eine siebartige Fläche ausbilden, die einerseits den Durchtritt von Flüssigkeiten und Gasen ermöglicht, jedoch Feststoffe zurückhält. Vorzugsweise ist der Durchmesser der jeweiligen zweiten Öffnungen hierbei kleiner, als die Partikelgröße und/oder die Größe sich bildender Partikelagglomerate, der in der Anmischmasse enthaltenen Pulver, wie Metallpulver, Keramik- oder Glaskeramikpulver. Die Vielzahl an zweiten Öffnungen kann auch in der Art von Poren und/oder Kapillaren, die die Wandung durchsetzen ausgebildet, sodass die Wandung vollständig oder bereichsweise poröse und/oder hygroskopische Eigenschaften aufweist.

Eine solche Ausgestaltung hat den Vorteil, dass in der Anmischmasse enthaltene Feuchtigkeit von der angrenzenden, porösen und/oder hygroskopischen Wandung aufgenommen oder aufgesogen und vorzugweise aus dem Inneren heraus, in Richtung der die Kaltgussform umgebenden Atmosphäre abtransportiert werden. Dieser Effekt kann durch Erhöhung der die Kaltgussform umgebenden Umgebungstemperatur oder andere Maßnahmen zur Senkung der Luftfeuchtigkeit der Umgebung, wodurch eine trockenere Umgebungsluft erzeugt wird, unterstützt werden.

Eine Verfahrensvariante sieht daher vor, dass die Anmischmasse in der Kavität der Kaltgussform unter Wärmeeinwirkung aushärtet und/oder sich verfestigt, wobei die mit der Anmischmasse befüllte Kaltgussform in einem Trockenschrank oder einem Sinterofen platziert wird und eine Temperatur in einem Temperaturbereich von 30°C bis 120°C eingestellt wird. Bedarfsweise kann auch die Luftfeuchtigkeit der Umgebung auf einen gewünschten Wert eingestellt werden. Für eine schonende, gleichmäßige und gleichzeitig schnelle Trocknung hat sich eine Luftfeuchtigkeit in einem Bereich von 1% bis höchstens 50% als vorteilhaft herausgestellt.

Durch die Wärmeeinwirkung und bedarfsweise reduzierte Luftfeuchtigkeit lässt sich das Aushärten der Anmischmasse, zum Beispiel im Falle eines Trocknungsprozesses beschleunigen. Insbesondere wird die in der Umgebung, also im Trockenschrank bzw. Klimaschrank oder im Sinterofen vorliegende Atmosphäre bzw. Umgebungsluft getrocknet, wodurch in der Anmischmasse enthaltene Feuchtigkeit und/oder Flüssigkeit schneller aus der Kavität in die Umgebung abtransportiert werden. Gerade bei der Ausgestaltung von Wandungen der Kaltgussform mit einer porösen und/oder hygroskopischen Fläche, die von einer Vielzahl zweiter Öffnungen in der Art von Poren und/oder Kapillaren durchsetzt ist, kann dieser Effekt erheblichen Einfluss auf die Trocknungszeiten haben

Sowohl beim Aushärten und/oder Verfestigen der Anmischmasse, als auch beim Sintern tritt üblicherweise ein Volumenschrumpf bzw. Sinterschrumpf des Formteils auf, der durch die Verdichtung der Anmischmasse bedingt ist. Vorzugsweise umfasst der auf einem räumlichen Modell des Mundraums eines Patienten basierende, digitale Datensatz zur geometrischen Ausgestaltung der Kavität der Kaltgussform einen sinterund/oder aushärtebedingten Volumenschrumpf der Anmischmasse.

Je nach verwendeter Anmischmasse ist ein entsprechender Volumenschrumpf beim Aushärten und/oder Sintern der Anmischmasse zu berücksichtigen, die Kavität der Kaltgussform ist mit einer entsprechend angepassten (größeren) Ausgangsgeometrie auszubilden. Für Keramikpulver enthaltende Anmischmassen ist bspw. ein Sinterschrumpf in einem Bereich von 25% bis 50%, für Sol und Nanozirkonoxidpartikel enthaltende Anmischmassen in einem Bereich von 50% bis 95% und für Metallpulver enthaltende Anmischmassen ein Sinterschrumpf in einem Bereich von 8% bis 25% jeweils bezogen auf die Ausgangsgeometrie zu berücksichtigen. Für die Aushärtung der Anmischmasse durch Licht und/oder Trocknung ist ein Volumenschrumpf von ca. 2% bis 20% bezogen auf die Ausgangsgeometrie zu berücksichtigen. Auch für die Kaltgussform selbst kann bei der Herstellung des Formteils, insbesondere des zahnmedizinischen Formteils ein Volumenschrumpf in einem Bereich von 1% bis 10% bezogen auf die Ausgangsgeometrie berücksichtigt werden. Die nach dem erfindungsgemäßen Verfahren hergestellte Kaltgussform ermöglicht eine kostengünstige Herstellung von Formteilen, insbesondere zahnmedizinischen Formteilen aus unterschiedlichsten Anmischmassen.

Um Sicherzustellen, dass stets ausreichend Anmischmasse zur Herstellung des Formteils, insbesondere zahnmedizinischen Formteils, insbesondere bei Auftreten von Volumenschrumpf, zur Verfügung steht, ist in Weiterbildung mindestens ein Ausgleichsvolumen ggf. über einen Befüllungskanal fluidleitend mit der Kavität der Kaltgussform zum Vorhalten von Anmischmasse verbunden. Vorzugsweise wird auch das Ausgleichsvolumen einstückig mit der Kaltgussform additiv aufgebaut. Insbesondere bei Verwendung von Anmischmasse mit höherem Feuchtigkeitsgehalt und/oder bei Lufteinschlüssen, fungiert das Ausgleichsvolumen als eine Art Reservoir und ermöglicht ein Nachlaufen oder Nachrieseln von Anmischmasse um den Volumenverlust, der durch das Entweichen von Gasen und/oder Flüssigkeiten über die mindestens eine zweite Öffnung aus der Kavität bedingt ist, auszugleichen.

Für das Verfahren vorteilhaft ist es, wenn zum additiven Aufbauen der Kaltgussform ein organisches Material, insbesondere ein organisches Polymer, ein Wachs oder ein Kunststoff, vorzugsweise mit einem Schmelzpunkt oder einer Zersetzungstemperatur in einem Temperaturbereich von 40°C bis 300°C, als Ausgangsmaterial verwendet wird, sodass die Kaltgussform plastifizierbar und/oder thermisch und/oder thermochemisch zersetzbar ist. Eine Materialgruppe mit besonders niedriger Wärmebeständigkeit stellen bspw. Wachse dar. Durch Verwendung eines wachshaltigen, organischen Materials, kann eine Erweichung bzw. Plastifizierung der Kaltgussform bereits ab einer Temperatur von ca. 35°C erzielt werden.

Organische Materialien wie Wachse und/oder Polymere und/oder Kunststoffe sind wesentlich einfacher und somit kostengünstiger in additiven Materialaufbauverfahren wie zum Beispiel beim 3-D Drucken einzusetzen. Die Wärmebeständigkeit von Kunststoffen ist vergleichsweise gering, sodass sich die aus einem organischen Material additiv aufgebaute Kaltgussform plastifizieren oder sogar thermisch und/oder thermochemisch, insbesondere durch Pyrolyse und/oder Verbrennung zersetzen lässt. Vorteilhaft kann für Strukturen und/oder Wandungen der Kaltgussform, die nicht die Kavität begrenzen bzw. unmittelbar an diese anschließen, insbesondere für Stützstrukturen, Befüllungskanäle, Ausgleichsvolumen usw. ein Ausgangsmaterial mit einem niedrigeren Schmelzpunkt, bspw. Wachs verwendet werden, als für die die Kavität begrenzenden Wandungen der Kaltgussform, die dann bspw. aus Polymeren oder Kunststoffen additiv aufgebaut werden. Auf diese Weise lassen sich beim Plastifizieren oder Zersetzen der Kaltgussform, insbesondere wärmebedingt auftretende Spannungen, die zu Beschädigungen des Formteils führen könnten, vermindern oder sogar ganz vermeiden. Auch andere Eigenschaften der Kaltgussform, wie Wasserlöslichkeit, Farbe, Transparenz usw. können durch additives Aufbauen, insbesondere 3D-Drucken mit unterschiedlichem Ausgangsmaterial an verschiedenen Bereichen voneinander abweichend ausgeführt sein. Das organische Ausgangsmaterial kann geringe Zusätze an anorganischen Materialien enthalten. Beispielsweise ist es üblich, Kunststoffen anorganische Additive beizumischen. Der Anteil an organischen Komponenten liegt aber stets über dem Anteil an anorganischen Komponenten.

Gemäß einer bevorzugten Verfahrensausgestaltung umfasst die Anmischmasse ein Metallpulver, insbesondere ein CrCo-Pulver, oder ein Keramikpulver, insbesondere ein Aluminium- und/oder ein Zirkonoxidpulver, und/oder ein Glaskeramikpulver, insbesondere ein Lithiumdisilikatpulver, und ein Bindemittel.

Bindemittelhaltige Anmischmassen können allein durch Trocknung, ohne Druckbeaufschlagung, in der Kaltgussform, insbesondere bis zur Grünlingshärte ausgehärtet werden. Durch Verwendung eines Bindemittels kann also auf das aus dem Stand der Technik bekannte, kostenintensive isostatische Pressen verzichtet werden. Gegenüber dem ebenfalls im Stand der Technik beschriebenen Verfahren ist es dann aber erforderlich, das Aushärten der Anmischmasse bei geöffneter Kaltgussform (ohne "Deckel") durchzuführen, sodass Fluide über die mindestens eine, Öffnung aus der Kavität der Kaltgussform ausgeleitet werden. Bindemittel sind in vielfacher Ausführung aus dem Stand der Technik bekannt und bestehen zum Großteil aus organischen Stoffen, wie Harzen, Tensiden oder Wachsen, die zu einem vergleichsweise niedrigen Schmelzpunkt führen.

Um ein schonendes Ablösen der Kaltgussform von der Anmischmasse zu realisieren, bevor eine Entbinderung stattfindet bzw. bevor das Bindemittel zu schmelzen beginnt, liegt nach einer Verfahrensvariante die Temperaturbeständigkeit und/oder Wärmeformbeständigkeit der Kaltgussform, insbesondere der Schmelzpunkt und/oder die Zersetzungstemperatur der Kaltgussform unterhalb des Schmelzpunkts des Bindemittels und/oder unterhalb der Sintertemperatur der Anmischmasse, insbesondere des Metallpulvers oder des Keramikpulvers liegen.

Vorzugsweise härtet die Anmischmasse in der Kavität der Kaltgussform also aus, insbesondere sogar bis zur Grünlingshärte aus, bevor die Zersetzung der Kaltgussform eingeleitet oder vollständig durchgeführt wird.

Die Zersetzung der Kaltgussform kann nach einer Verfahrensgestaltung durch Wärmeeinwirkung bei einer Temperatur in einem Temperaturbereich von 200°C bis 650°C eingeleitet oder vollständig durchgeführt werden, bevor die Anmischmasse auf Endhärte gesintert wird.

Zweckmäßigerweise kann der Schmelzpunkt und/oder die Zersetzungstemperatur der Kaltgussform hierzu unterhalb der Sintertemperatur des Metallpulvers oder des Keramikpulvers liegen.

Eine Weiterbildung des Verfahrens sieht vor, dass das zum additiven Aufbauen der Kaltgussform verwendete, organische Material durch Wärmeeinwirkung zunächst bei einer Temperatur in einem Temperaturbereich von 35°C bis 300°C plastifiziert und bei einer Temperatur in einem Temperaturbereich von 200°C bis 650°C thermisch durch Pyrolyse und/oder thermochemisch durch Verbrennung zersetzt wird.

Um ein Ablösen der die Kavität begrenzenden Wandungen von der darin befindlichen Anmischmasse zu erleichtern, wird die mit der Anmischmasse befüllte Kaltgussform in einem Trockenschrank bzw. Klimaschrank oder einem Sinterofen platziert und eine Temperatur in einem Temperaturbereich von 35°C bis 300°C eingestellt. Hierbei können sich die Materialeigenschaften von organischen Materialien bzw. Kunststoffen zunutze gemacht werden. Bevor der Schmelzpunkt der Kaltgussform erreicht wird beginnt sich das organische Material, insbesondere der Kunststoff zu erweichen, wodurch die Kaltgussform plastifizierbar bzw. plastisch verformbar ist. Durch gezieltes Einblasen von Pressluft lässt sich die weiche, verformbare Kaltgussform von der vorzugsweise bereits (auf Grünlingshärte) ausgehärteten Anmischmasse lösen.

Vorteilhaft wird die thermische und/oder thermochemische Zersetzung der Kaltgussform in einem Sinterofen durchgeführt, wobei die Kaltgussform gemeinsam mit der darin befindlichen Anmischmasse in dem Sinterofen platziert wird.

Ein optionaler Verfahrensschritt sieht vor, die Anmischmasse vor dem eigentlichen Sintern, insbesondere bei einer Temperatur in einem Temperaturbereich von 650°C bis 1300°C vorzusintern, um die Bindemittelanteile zu entfernen, bevor das Formteil auf Endhärte verdichtet wird.

Die thermische und/oder thermochemische Zersetzung kann dann vollständig und/oder bei hohen Temperaturen in einem Sintertemperaturbereich von 900°C bis 2500°C fortgesetzt werden, sodass eine rückstandslose oder zumindest nahezu rückstandslose Auflösung der Kaltgussform durch Wärmeeinwirkung ermöglicht wird.

Nach einer Verfahrensvariante wird die Zersetzung der Kaltgussform unter sauerstofffreien Bedingungen thermisch, insbesondere pyrolytisch oder unter Sauerstoffzufuhr thermochemisch, insbesondere durch Verbrennung durchgeführt.

Bei der pyrolytischen Zersetzung der Kaltgussform unter sauerstofffreien Bedingungen wird die Kaltgussform gemeinsam mit der darin enthaltenen Anmischmasse in einem Sinterofen platziert, der ein Sintern unter Vakuum und/oder (sauerstoffarmer oder sauerstofffreier) Schutzatmosphäre ermöglicht. Diese Verfahrensvariante eignet sich besonders zur Herstellung von metallischen, zahnmedizinischen Formteilen, beispielsweise aus einer CrCo-Legierung, um Beschädigungen des Formteils durch Oxidation zu vermeiden.

Insbesondere zum Erhalt von keramischen, Formteilen, insbesondere zahnmedizinischen Formteilen ist nach einer anderen Verfahrensvariante aber auch eine Zersetzung der Kaltgussform unter Sauerstoffzufuhr durch Verbrennung möglich.

Schließlich kann nach einer Verfahrensvariante die Kaltgussform, insbesondere können die die Kavität begrenzenden Wandungen der Kaltgussform, vor der Befüllung mit der Anmischmasse mit einem Beschichtungsmittel beschichtet werden, um eine reib- und/oder stoffschlüssige Verbindung zwischen der Kaltgussform und der Anmischmasse zu vermeiden.

Denkbar ist, die Kaltgussform zeitnah oder unmittelbar vor der Befüllung mit der Anmischmasse in ein Becken mit einer organischen, öligen Flüssigkeit wie beispielsweise Petroleum zu tauchen oder alternativ mit einer organischen, öligen Flüssigkeit wie beispielsweise Petroleum zu spülen. Auf diese Weise lässt sich einfach und unkompliziert eine hitzebeständige Schutzschicht zwischen den die Kavität begrenzenden Wandungen der Kaltgussform und der Anmischmasse ausbilden, ohne die erste und/oder die zweite Öffnung zu verschließen.

Bei zahnmedizinischen Formteilen, wie Kronen, Brücken, Zahnimplantatteilen und/oder Prothesen sind oftmals filigrane, dünnwandige Strukturen erforderlich. Gerade zur Herstellung von zahnmedizinischen Formteilen aus Keramik oder Metall sind hohe Sintertemperaturen erforderlich. Um eine Beschädigung des Formteils durch die thermische Ausdehnung der Kaltgussform zu vermeiden, beträgt die lineare, thermische Ausdehnung der Kaltgussform vorteilhaft höchstens 10%, bevorzugt höchstens 3% und besonders bevorzugt höchstens 0,8% bezogen auf ihre Ausgangsgeometrie, wobei die maximale, thermische Ausdehnung der Kaltgussform bei einer Temperatur kleiner oder gleich 240°C, bevorzugt kleiner oder gleich 200°C, weiter bevorzugt kleiner oder gleich 150°C und besonders bevorzugt, kleiner oder gleich 100°C erreicht ist. Vorzugsweise kann der Wärmeausdehungskoeffizient (WAK-Wert) der Anmischmasse unter Berücksichtigung der jeweiligen WAK-Werte des verwendeten Metall-, Keramik- oder Glaskeramikpulvers, durch die Anteile an Polyelektrolyten und Bindemittel (Polymeren) and den WAK-Wert der Kaltgussform angepasst werden, sodass Kaltgussform und Anmischmasse einer ähnlichen oder identischen Wärmeausdehnung unterliegen. Zusätzlich oder alternativ kann die mechanische Stabilität der Anmischmasse (im Grünlingszustand) durch Erhöhung des Bindemittelanteils erhöht werden.

Um die insbesondere für zahnmedizinische Formteile erforderliche Maßhaltigkeit der Kaltgussform, auch bei Druckbefüllungsverfahren, zu erreichen, weist die Kaltgussform eine Shore-Härte nach Shore-A von mindestens 15 und/oder nach Shore-D von mindestens 10 und einen Elastizitätsmodul von mindestens 5 MPa auf. Die, die Kavität der Kaltgussform begrenzenden Wandungen weisen vorzugsweise jeweils eine Wandstärke von mindestens 0,01 mm auf. Die Shore-Härte ist ein Werkstoffkennwert für Elastomere und Kunststoffe und ist in den Normen DIN EN ISO 868, DIN ISO 7619-1 und ASTM D2240-00 festgelegt. Das Elastizitätsmodul, auch als Zugmodul oder E-Modul bezeichnet, wird für Kunststoffe insbesondere nach DIN EN ISO 527-1:2019-12 bestimmt.

Ein beispielhafter Prototyp einer erfindungsgemäßen Kaltgussform, geeignet zur Herstellung von Formteilen, insbesondere zahnmedizinischen Formteilen, wurde nach einem Stereolithographie 3D-Druckverfahren mit folgenden PHYSIKALISCHEN EIGENSCHAFTEN hergestellt:

| ASTM-Methode | Eigenschaftsbeschreibung | Metrisch | Imperial |
|---|---|---|---|
| D638M | Zugmodul | 2100 MPa | 305,000 psi |
| D638M | Bruchfestigkeit | 44.9 MPa | 6,500 psi |
| D638M | Bruchdehnung | 6.1% | 6.1% |
| D790M | Biegefestigkeit | 74.3 MPa | 10,770 psi |
| D790M | Biegemodul | 2200 MPa | 329,000 psi |
| D224 | Härte (Shore D) | 85 | 85 |
| D256A | Izod-Schlagzähigkeit | 0.23 J/cm | 0.46 ft lb/in |
| D570-98 | Wasseraufnahme | 0.7% | 0.7% |
| D648 | HDT @ 0.46 MPa (66 psi) | 59° C | 138°F |
| D648 | HDT @ 1.82 MPa (264 psi) | 50° C | 122°F |

Weitere Einzelheiten, Merkmale, Merkmals(unter) -kombinationen, Vorteile und Wirkungen auf der Basis der Erfindung ergeben sich aus der nachfolgenden Beschreibung bevorzugter Ausführungsbeispiele der Erfindung und den Zeichnungen. Diese zeigen in
- Fig. 1: ein Flussdiagramm eines beispielhaften Ablaufs des erfindungsgemäßen Verfahrens zur Herstellung eines Formteils, hier am Beispiel eines zahnmedizinischen Formteils,
- Fig. 2: eine schematische Darstellung einer Kaltgussform deren Kavität der Form eines Zahnersatzes entspricht,
- Fig. 3: eine schematisch perspektivische Darstellung eines Ausführungsbeispiels einer Kaltgussform mit einem Befüllungskanal und einem Ausgleichsvolumen,
- Fig. 4: eine Schnittdarstellung der Kaltgussform aus Figur 3,
- Fig. 5: eine schematisch perspektivische Darstellung eines zweiten Ausführungsbeispiels einer erfindungsgemäßen Kaltgussform mit zwei Befüllungskanälen,
- Fig. 6: eine schematisch perspektivische Darstellung eines Formteils, welches mit einer erfindungsgemäßen Kaltgussform hergestellt wurde.

Die Figuren sind lediglich beispielhafter Natur und dienen nur dem Verständnis der Erfindung. Die gleichen Elemente sind mit denselben Bezugszeichen versehen und werden daher in der Regel auch nur einmal beschrieben.

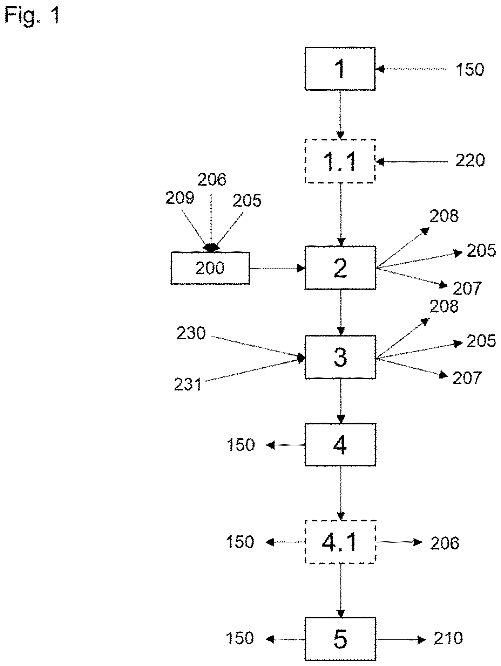

Die Figur 1 zeigt ein Flussdiagramm eines beispielhaften Ablaufs des erfindungsgemäßen Verfahrens zur Herstellung eines zahnmedizinischen Formteils 210. Hierbei wird zunächst eine Kaltgussform 100 hergestellt (1). Die Kaltgussform 100 wird mittels eines additiven Materialaufbauverfahrens, zum Beispiel mit einem 3D-Drucker aufgebaut, wobei die Kaltgussform 100 mit mindestens einer Öffnung 111, 112 aufgebaut wird. Als Ausgangsmaterial 150 wird vorzugsweise ein thermisch und/oder ein thermochemisch zersetzbarer Kunststoff verwendet. Optional kann die Kaltgussform 100, bevor diese mit der Anmischmasse 200 befüllt wird, mit einem Beschichtungsmittel 220 beschichtet werden (1.1). Als Beschichtungsmittel 220 ist beispielsweise Petroleum geeignet, wobei die Kaltgussform 100 vorzugsweise in ein Becken mit Petroleum getaucht wird. Im Anschluss wird die Kaltgussform 100 mit der Anmischmasse 200 befüllt (2). Je nach gewünschtem Formteil 210 umfasst die Anmischmasse 200 ein keramisches oder metallisches Pulver 209, welches zur Herstellung von zahnmedizinischen Formteilen geeignet ist. Vorzugsweise wird das jeweilige Pulver 209 mit einem Verdünnungsmittel 205, zum Beispiel Wasser oder einem organischen Lösungsmittel, zu einem Schlicker oder einer pastösen Masse angerührt, mit einem Bindemittel 206 versetzt und vor der Verwendung konditioniert. Die Anmischmasse 200 wird über die mindestens eine Öffnung 111, 112 in die Kavität 110 der Kaltgussform 100 gefüllt. Bereits während der Befüllung können in der Anmischmasse 200 enthaltene Fluide 207, insbesondere das Verdünnungsmittel 205 oder Lufteinschlüsse 208 über die mindestens eine Öffnung 111, 112 entweichen. Nach der Befüllung härtet die Anmischmasse 200 im Inneren der Kaltgussform 100, genauer in deren Kavität 110 aus bzw. verfestigt sich (3). Um die Aushärtung bzw. Verfestigung zu beschleunigen wird die Kaltgussform 100 beispielsweise in einen Trockenschrank oder Klimaschrank zur Einstellung einer gewünschten Luftfeuchtigkeit der Umgebung, gestellt und mit Wärme 230 beaufschlagt, sodass eine schnellere Trocknung bzw. Verdunstung der flüssigen Bestandteile der Anmischmasse 200 erfolgt. Hierbei können Fluide 207, Verdünnungsmittel 205 oder Lufteinschlüsse 208 weiterhin über die mindestens eine Öffnung 111, 112 entweichen. Für die Herstellung von keramischen oder metallischen, zahnmedizinischen Formteilen 210 wird die Aushärtung in der Kaltgussform 100 vorzugsweise bis zur Grünlingshärte durchgeführt. Die Stabilität des Grünlings lässt sich durch die verwendeten Bindemittel 206 erzielen.

Nach der Aushärtung bzw. Verfestigung wird die Kaltgussform 100 gemeinsam mit der darin befindlichen, ausgehärteten Anmischmasse 200 in einem Sinterofen bei einer Temperatur in einem Bereich von 35°C bis 300°C vorzugsweise zunächst erweicht und kann beispielsweise durch Einblasen von Pressluft "aufgeblasen" und von der Anmischmasse 200 abgelöst werden.

Zweckmäßigerweise wird die Kaltgussform 100 thermisch oder thermochemisch zersetzt (4), bevor oder während die Anmischmasse 200 auf Endhärte aushärtet. Hierzu wird eine thermische Zersetzung bzw. eine Pyrolyse unter Sauerstoffausschluss oder eine thermochemische Zersetzung bzw. eine Verbrennung mit Sauerstoff der Kaltgussform 100 in einem Sinterofen bei einer Temperatur in einem Temperaturbereich von 200°C bis 650°C eingeleitet, bei der das Ausgangsmaterial 150 vollständig oder nahezu vollständig aufgelöst wird. Bei einer Temperatur in einem Temperaturbereich von 650°C bis 1300°C kann die Anmischmasse 200 optional vorgesintert (4.1) werden, wobei sich das Bindemittel 206 verflüchtigt. Beim abschließenden End- oder Dichtsintern (5) wird die Anmischmasse 200 bei einer Temperatur in einem Temperaturbereich von 900°C bis 2500°C auf Endhärte verdichtet und kann als fertiges, zahnmedizinisches Formteil 210 aus dem Sinterofen entnommen werden. Auch etwaige noch nicht vollständig zersetzte Überreste der Kaltgussform 100 werden beim Vor- oder Endsintern zersetzt.

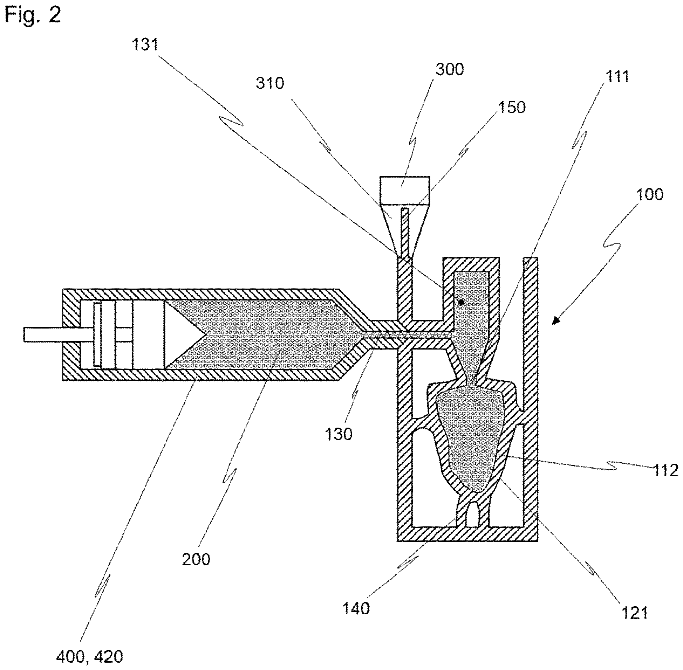

Die Figur 2 zeigt eine beispielhafte Ausführungsform der Erfindung, bei der die Kaltgussform 100 eine Kavität 110 aufweist, die der Geometrie eines zahnmedizinischen Formteils 210 entspricht. Schematisch angedeutet ist in der Abbildung außerdem eine Druckdüse 310 eines 3D-Druckers 300, mittels welcher die Kaltgussform 100 aus dem Ausgangsmaterial 150 einstückig additiv aufgebaut wird. Die Kaltgussform 100 umfasst eine erste Öffnung 111, die über ein Ausgleichsvolumen 131 fluidleitend an einen Befüllungskanal 130 anschließt. Über den Befüllungskanal 130 wird mit einem Befüllungsmittel 400, hier beispielhaft einer Injektionsspritze 420, die Kavität 110 mit der Anmischmasse 200 befüllt. In der Anmischmasse 200 enthaltene Fluide 207 oder bei der Befüllung entstehende Lufteinschlüsse 208 werden über eine Vielzahl zweiter Öffnungen 112 aus der Kavität 110 ausgeleitet. Die zweiten Öffnungen 112 sind hier als Kapillaren oder Poren der außenliegenden Wandungen 121 ausgebildet und daher mit bloßem Auge nicht erkennbar. Durch die Vielzahl zweiter Öffnungen 112 entsteht eine poröse oder hygroskopische Fläche, die in der Anmischmasse 200 enthaltene Fluide 207 bzw. Feuchtigkeit aus der Kavität in die außenliegende Umgebung leitet.

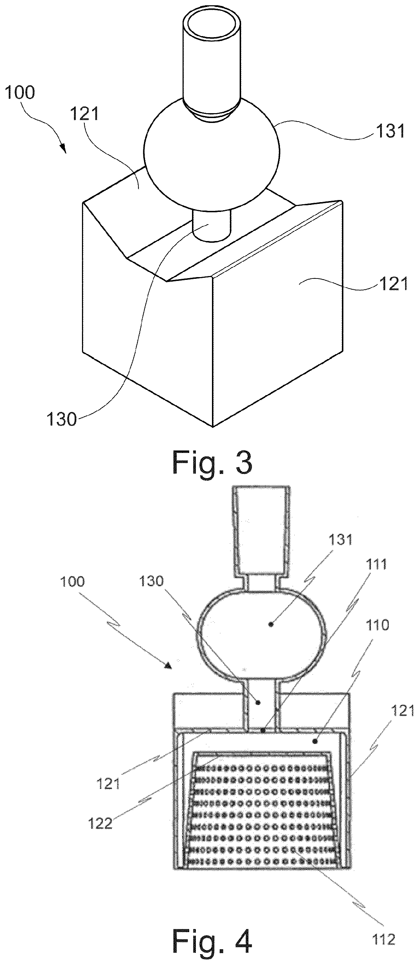

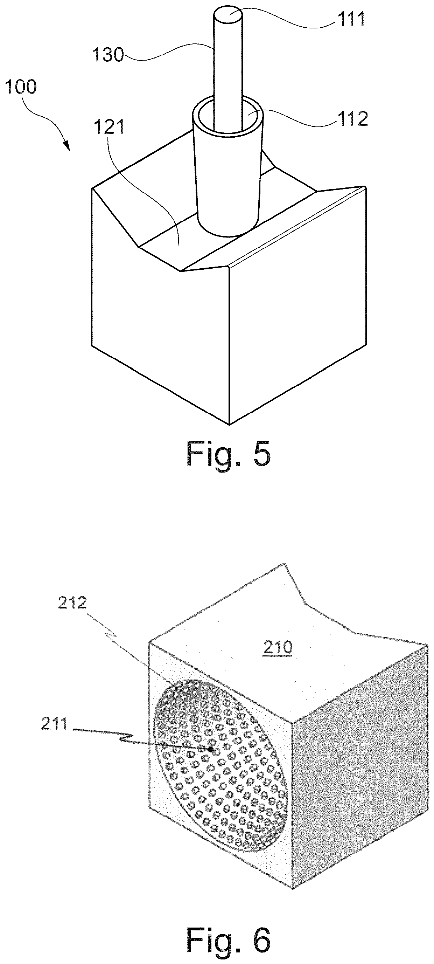

Die Figuren 3 und 4 zeigen jeweils ein Ausführungsbeispiel einer Kaltgussform 100, in einer schematisch perspektivischen Darstellung bzw. in einer Schnittdarstellung. Die Kaltgussform 100 ist hier beispielhaft in der Form eines Prüfkörpers ausgeführt, dessen Kavität 110 für zahnmedizinische Formteile 210 typische geometrische Eigenschaften aufweist, die zu Wandstärken des Formteils 210 in einem Bereich von 0,30 mm bis 10 mm führen. Die Kavität 110 der Kaltgussform 100 wird durch die außenliegenden Wandungen 121 sowie die innenliegenden Wandungen 122 der Kaltgussform 100 begrenzt, sodass das fertige Formteil 210, z. B. eine Krone, einen innenliegenden Hohlraum 211 (s. Figur 6) aufweist, der beispielsweise der Form eines Abutments entspricht, wodurch sich die Krone auf das Abutment aufsetzen lässt. Die innenliegenden Wandungen 122 bilden hierzu eine zylindrische oder kegelstumpfartige Form aus. In die Kavität 110 mündet eine erste Öffnung 111, die eine der außenliegenden und bezüglich des zahnmedizinischen Formteils 210 okklusale Wandung 121 durchsetzt. Über die erste Öffnung 111 wird die Kavität 110 mit der Anmischmasse 200 befüllt. Die innenliegenden Wandungen 122 sind mit einer Vielzahl zweiter Öffnungen 112 durchsetzt, die beispielsweise das Entweichen von in der Anmischmasse 200 enthaltenen Fluiden 205, 207 und/oder Lufteinschlüssen 208 bereits während der Befüllung ermöglichen. Nach der Befüllung können Fluide 205, 207, 208 optional zusätzlich über die erste Öffnung 111 austreten. Die Vielzahl zweiter Öffnungen 112 kann, wie hier beispielhaft gezeigt eine innere Mantelfläche der Kavität 110 siebartig durchsetzen. Alternativ könnte die Vielzahl zweiter Öffnungen 112 in der Art von Poren und/oder Kapillaren ausgeführt sein und eine poröse und/oder hygroskopische Fläche bilden.

An die erste Öffnung 111 schließt fluidleitend ein Befüllungskanal 130 mit einem Ausgleichsvolumen 131 an. An den Befüllungskanal 130 können Befüllungsmittel 400, wie beispielsweise Injektionsspritzen 420, insbesondere Niederdruckinjektionsspritzen (s. Figur 2) oder Zuleitungen, wie Schläuche 410 angeschlossen werden, um die Befüllung der Kavität 110 mit Anmischmasse 200 zu erleichtern. Das Ausgleichsvolumen 131 dient als eine Art Reservoir für die Anmischmasse 200, sodass der Volumenverlust von durch die zweiten Öffnungen 112 entweichenden Fluiden 205, 207, 208 mittels der im Ausgleichsvolumen 131 vorgehaltenen Anmischmasse 200 ausgeglichen werden kann. Die Kaltgussform 100 ist im dargestellten Ausführungsbeispiel einstückig mit dem Befüllungskanal 130 und dem Ausgleichsvolumen 131 hergestellt.

In der Figur 5 ist eine schematisch perspektivische Darstellung eines zweiten Ausführungsbeispiels einer erfindungsgemäßen Kaltgussform 100 dargestellt. Die Kaltgussform 100 entspricht dem in den Figuren 1 und 2 gezeigten ersten Ausführungsbeispiel mit der Ausnahme, dass der Befüllungskanal 130 ohne das (optionale) Ausgleichsvolumen 131 ausgebildet ist und eine kanalartige, zweite Öffnung 112 einstückig in die okklusale, außenliegende Wandung 121 mündet. Der Befüllungskanal 130 kann wahlweise einstückig oder auch als Zusatzteil der Kaltgussform 100 realisiert sein und mündet mit seiner ersten Öffnung 111 in die Kavität 110. In dieser Variante durchsetzt die erste Öffnung 111 die zweite Öffnung 112 konzentrisch. Bedarfsweise kann ein separates Ausgleichsvolumen 131, insbesondere als Bestandteil eines Befüllungsmittels 400 an den Befüllungskanal 130 angeschlossen werden.

Die, auf die für zahnmedizinische Formteile 210 erforderliche Endhärte ausgehärtete Anmischmasse 200 ist der Figur 6 als fertiges Formteil 210, welches mit der als Prüfkörper ausgebildeten Kaltgussform 100 hergestellt wurde, zu entnehmen. Das Formteil 210 weist Wandstärken in einem Bereich von 0,3 mm bis 10 mm auf. Ein unterer, apikaler Abschnitt das Formteils 210 ist mit einer Ausnehmung 211 ausgebildet, deren Form der Form eines Abutments zum Aufsetzen eines zahnmedizinischen Formteils 210, beispielsweise einer Krone, entspricht. Durch die Vielzahl an zweiten Öffnungen 112, die die innenliegenden Wandungen 122 der Kaltgussform 100 in siebartiger Struktur durchsetzen (siehe Figur 4), sind die nach innen weisenden Wandungen der Ausnehmung 211 mit einer noppenartigen Oberfläche 212 versehen. Die noppenartige Oberfläche 212 verbessert den Halt zwischen dem zahnmedizinischen Formteil 210, beispielsweise einer Krone sowie z. B. einem Abutment.

### Bezugszeichenliste

- 100: Kaltgussform
- 110: Kavität oder Werkzugform
- 111: erste Öffnung
- 112: zweite Öffnung
- 120: Wandung
- 121: außenliegende Wandung
- 122: innenliegende Wandung
- 130: Befüllungskanal
- 131: Ausgleichsvolumen
- 140: Stützstruktur
- 150: Ausgangsmaterial
- 200: Anmischmasse
- 205: Verdünnungsmittel
- 206: Bindemittel
- 207: Fluide
- 208: Lufteinschlüsse
- 209: Pulver
- 210: Formteil
- 211: Ausnehmung
- 220: Beschichtungsmittel
- 230: Wärme/Luftfeuchtigkeit
- 231: Licht
- 300: 3D-Drucker
- 310: Druckdüse
- 400: Befüllungsmittel
- 420: Injektionsspritze, insbesondere Nidederdruckinjektionsspritze

### Verfahrensschritte:

- 1: Herstellen einer Kaltgussform
- 1.1: Beschichten der Kaltgussform
- 2: Befüllen der Kaltgussform mit Anmischmasse
- 3: Aushärten und/oder Verfestigen der Anmischmasse in der Kaltgussform
- 4: thermisches oder thermochemisches Zersetzen der Kaltgussform
- 4.1: Vorsintern
- 5: Sintern/Endsintern

## Patentansprüche

1. Verfahren zur Herstellung von Formteilen (210), insbesondere zahnmedizinischen Formteilen (210) aus einer sinterfähigen Anmischmasse (200) unter Verwendung einer Kaltgussform (100) mit einer dem Formteil, insbesondere zahnmedizinischen Formteil (210) geometrisch entsprechenden Kavität (110) und mindestens einer in die Kavität (110) mündenden und/oder aus der Kavität (110) führenden, ersten Öffnung (111), mit den folgenden Verfahrensschritten:
(1) Herstellen der Kaltgussform (100) mittels eines additiven Materialaufbauverfahrens, insbesondere eines 3D-Druckverfahrens unter Verwendung eines 3D-Druckers (300), aus einem Ausgangsmaterial (150), wobei die Kavität (110) anhand eines digitalen Datensatzes, insbesondere basierend auf einem räumlichen Modell des Mundraums eines Patienten erstellt wird,
(2) Befüllen der Kavität (110) der Kaltgussform (100) über die mindestens eine erste Öffnung (111) mit der sinterfähigen Anmischmasse (200),
(3) Aushärten und/oder Verfestigen der sinterfähigen Anmischmasse (200) in der Kavität (110) der Kaltgussform (100),
**dadurch gekennzeichnet, dass** die Kaltgussform mindestens eine in die Kavität (110) mündende und/oder aus der Kavität (110) führende zweite Öffnung (112) umfasst, wobei, insbesondere während der Schritte (2) und (3), in der sinterfähigen Anmischmasse (200) enthaltene und/oder eingeschlossene Gase und/oder Flüssigkeiten über die mindestens eine zweite Öffnung (112) aus der Kavität (110) ausgeleitet werden,
(4) thermisches und/oder thermochemisches Zersetzen der Kaltgussform (100) bei einer Temperatur in einem Temperaturbereich von 200°C bis 2500°C,
(5) Sintern der sinterfähigen Anmischmasse (200) auf Endhärte bei einer Temperatur in einem Temperaturbereich von 900°C bis 2500°C, bis ein Formteil (210), insbesondere ein zahnmedizinisches Formteil (210), wie ein Zahnersatz erhalten wird.

2. Verfahren nach Anspruch 1,
**dadurch gekennzeichnet, dass**
die Anmischmasse (200) als Schlicker und/oder pastöse Masse vorliegt und ein Verdünnungsmittel (205), insbesondere Wasser umfasst, wobei die Anmischmasse (200) in der Kavität (110) der Kaltgussform (100) durch Trocknung aushärtet und/oder sich verfestigt und ein Flüssigkeitsanteil und/oder Feuchtigkeitsgehalt der Anmischmasse (200) mittels der mindestens einen Öffnung (111, 112) aus der Kaltgussform (100) ausgeleitet, insbesondere der Anmischmasse (200) entzogen wird.

3. Verfahren nach einem der vorhergehenden Ansprüche,
**dadurch gekennzeichnet, dass**
mindestens eine, die Kavität (110) begrenzende Wandung (120) der Kaltgussform (100) vollständig oder bereichsweise mit einer Vielzahl an in die Kavität (110) mündenden und/oder aus der Kavität (110) führenden und diese Wandung (120) durchsetzenden, zweiten Öffnungen (112) zum Ausleiten von Gasen, insbesondere Lufteinschlüssen (208) und/oder Flüssigkeiten, insbesondere Verdünnungsmitteln (205) additiv aufgebaut wird.

4. Verfahren nach einem der vorhergehenden Ansprüche,
**dadurch gekennzeichnet, dass**
die Anmischmasse (200) in der Kavität (110) der Kaltgussform (100) unter Wärmeeinwirkung aushärtet und/oder sich verfestigt, wobei die mit der Anmischmasse (200) befüllte Kaltgussform (100) in einem Trockenschrank, Klimaschrank oder einem Sinterofen platziert wird und eine Temperatur in einem Temperaturbereich von 30°C bis 120°C, und/oder eine Luftfeuchtigkeit in einem Bereich von 1% bis 50% eingestellt wird.

5. Verfahren nach einem der vorhergehenden Ansprüche,
**dadurch gekennzeichnet, dass**
der insbesondere auf einem räumlichen Modell des Mundraums eines Patienten basierende, digitale Datensatz zur geometrischen Ausgestaltung der Kavität (110) der Kaltgussform (100) einen sinter- und/oder aushärtebedingten Volumenschrumpf der Anmischmasse (200) umfasst.

6. Verfahren nach einem der vorhergehenden Ansprüche,
**dadurch gekennzeichnet, dass**
zum additiven Aufbauen der Kaltgussform (100) ein organisches Material, insbesondere ein organisches Polymer und/oder ein Wachs und/oder ein Kunststoff, vorzugsweise mit einem Schmelzpunkt oder einer Zersetzungstemperatur in einem Temperaturbereich von 40°C bis 300°C, als Ausgangsmaterial (150) verwendet wird, sodass die Kaltgussform (100) plastifizierbar und/oder thermisch oder thermochemisch zersetzbar ist.

7. Verfahren nach einem der vorhergehenden Ansprüche,
**dadurch gekennzeichnet, dass**
die Anmischmasse (200) ein Metallpulver (209), insbesondere ein CrCo-Pulver, oder ein Keramikpulver (209), insbesondere ein Aluminium- und/oder ein Zirkonoxidpulver und/oder ein Glaskeramikpulver, insbesondere ein Lithiumdisilikatpulver, und ein Bindemittel (206) umfasst.

8. Verfahren nach Anspruch 7,
**dadurch gekennzeichnet, dass**
der Schmelzpunkt und/oder die Zersetzungstemperatur der Kaltgussform (100) unterhalb des Schmelzpunkts oder der Zersetzungstemperatur des Bindemittels (206) liegt.

9. Verfahren nach einem der vorhergehenden Ansprüche,
**dadurch gekennzeichnet, dass**
die Anmischmasse (200) in der Kavität (110) der Kaltgussform (100) auf Grünlingshärte aushärtet, bevor die Zersetzung der Kaltgussform (100) eingeleitet oder vollständig durchgeführt wird.

10. Verfahren nach einem der vorhergehenden Ansprüche,
**dadurch gekennzeichnet, dass**
die Zersetzung der Kaltgussform (100) durch Wärmeeinwirkung bei einer Temperatur in einem Temperaturbereich von 200°C bis 650°C eingeleitet oder vollständig durchgeführt wird, bevor die Anmischmasse (200) auf Endhärte gesintert wird.

11. Verfahren nach einem der vorhergehenden Ansprüche,
**dadurch gekennzeichnet, dass**
der Schmelzpunkt und/oder die Zersetzungstemperatur der Kaltgussform (100) unterhalb der Sintertemperatur der Anmischmasse (200), insbesondere des Metallpulvers (209) oder Keramikpulvers (209) liegt.

12. Verfahren nach einem der vorhergehenden Ansprüche,
**dadurch gekennzeichnet, dass**
die thermische und/oder thermochemische Zersetzung der Kaltgussform (100) in einem Sinterofen durchgeführt wird, wobei die Kaltgussform (100) gemeinsam mit der darin befindlichen Anmischmasse (200) in dem Sinterofen platziert wird.

13. Verfahren nach einem der vorhergehenden Ansprüche,
**dadurch gekennzeichnet, dass**
die Zersetzung der Kaltgussform (100) unter sauerstofffreien Bedingungen thermisch, insbesondere pyrolytisch oder unter Sauerstoffzufuhr thermochemisch, insbesondere durch Verbrennung durchgeführt wird.

14. Verfahren nach einem der vorhergehenden Ansprüche,
**dadurch gekennzeichnet, dass**
die Kaltgussform (100), insbesondere die die Kavität (110) begrenzenden Wandungen (120) der Kaltgussform (100), vor der Befüllung mit der Anmischmasse (200) mit einem Beschichtungsmittel (220) beschichtet wird, um eine reib- und/oder stoffschlüssige Verbindung zwischen der Kaltgussform (100) und der Anmischmasse (200) zu vermeiden.

## Claims

1. A method for producing molded parts (210), in particular dental molded parts (210) from a sinterable mixing compound (200) using a cold casting mold (100) having a cavity (110) that corresponds geometrically to the molded part, in particular dental molded part (210) and at least one first opening (111) opening into the cavity (110) and/or leading out of the cavity (110), having the following method steps:
(1) producing the cold casting mold (100) by means of an additive material construction method, in particular a 3D printing method using a 3D printer (300), from a starting material (150), wherein the cavity (110) is created on the basis of a digital data set, in particular based on a three-dimensional model of the oral cavity of a patient,
(2) filling the cavity (110) of the cold casting mold (100) via the at least one first opening (111) with the sinterable mixing compound (200),
(3) curing and/or solidifying the sinterable mixing compound (200) in the cavity (110) of the cold casting mold (100),
**characterized in that,** the cold casting mold has at least one second opening (112) opening into the cavity (110) and/or leading out of the cavity (110), wherein, in particular during steps (2) and (3), gases and/or liquids contained and/or enclosed in the sinterable mixing compound (200) are discharged from the cavity (110) via the at least one second opening (112),
(4) thermally and/or thermochemically decomposing the cold casting mold (100) at a temperature in a temperature range from 200°C to 2500°C,
(5) sintering the sinterable mixing compound (200) to final hardness at a temperature in a temperature range from 900°C to 2500°C until a molded part (210), in particular a dental molded part (210), such as a denture is obtained.

2. The method as claimed in claim 1,
**characterized in that**
the mixing compound (200) is provided as a slurry and/or pasty mass and comprises a diluent (205), in particular water, wherein the mixing compound (200) cures and/or solidifies in the cavity (110) of the cold casting mold (100) by drying and a liquid component and/or moisture content of the mixing compound (200) is discharged by means of the at least one opening (111, 112) from the cold casting mold (100), in particular is withdrawn from the mixing compound (200).

3. The method as claimed in any one of the preceding claims,
**characterized in that**
at least one wall (120) of the cold casting mold (100) delimiting the cavity (110) is additively constructed completely or in regions having a plurality of second openings (112), which open into the cavity (110) and/or lead out of the cavity (110) and penetrate this wall (120), for discharging gases, in particular air inclusions (208) and/or liquids, in particular diluents (205).

4. The method as claimed in any one of the preceding claims,
**characterized in that**
the mixing compound (200) cures and/or solidifies in the cavity (110) of the cold casting mold (100) under the action of heat, wherein the cold casting mold (100) filled with the mixing compound (200) is placed in a drying cabinet, climatic cabinet, or a sintering furnace and a temperature in a temperature range from 30°C to 120°C and/or humidity in a range from 1% to 50% is set.

5. The method as claimed in any one of the preceding claims,
**characterized in that**
the digital data set, which in particular is based on a three-dimensional model of the oral cavity of a patient, for the geometric design of the cavity (110) of the cold casting mold (100) comprises a sintering-related and/or curing-related volume shrinkage of the mixing compound (200).

6. The method as claimed in any one of the preceding claims,
**characterized in that**
an organic material, in particular an organic polymer and/or a wax and/or a plastic, preferably having a melting point or a decomposition temperature in a temperature range from 40°C to 300°C, is used as the starting material (150) for additively constructing the cold casting mold (100), so that the cold casting mold (100) can be plasticized and/or thermally or thermochemically decomposed.

7. The method as claimed in any one of the preceding claims,
**characterized in that**
the mixing compound (200) comprises a metal powder (209), in particular a CrCo powder, or a ceramic powder (209), in particular an aluminum and/or a zirconium oxide powder and/or a glass ceramic powder, in particular a lithium disilicate powder, and a binder (206).

8. The method as claimed in claim 7,
**characterized in that**
the melting point and/or the decomposition temperature of the cold casting mold (100) is below the melting point or the decomposition temperature of the binder (206).

9. The method as claimed in any one of the preceding claims,
**characterized in that**
the mixing compound (200) in the cavity (110) of the cold casting mold (100) cures to green body hardness before the decomposition of the cold casting mold (100) is initiated or completely carried out.

10. The method as claimed in any one of the preceding claims,
**characterized in that**
the decomposition of the cold casting mold (100) is initiated or carried out completely by the action of heat at a temperature in a temperature range from 200°C to 650°C, before the mixing compound (200) is sintered to final hardness.

11. The method as claimed in any one of the preceding claims,
**characterized in that**
the melting point and/or the decomposition temperature of the cold casting mold (100) is below the sintering temperature of the mixing compound (200), in particular of the metal powder (209) or ceramic powder (209).

12. The method as claimed in any one of the preceding claims,
**characterized in that**
the thermal and/or thermochemical decomposition of the cold casting mold (100) is carried out in a sintering furnace, wherein the cold casting mold (100) is placed in the sintering furnace together with the mixing compound (200) located therein.

13. The method as claimed in any one of the preceding claims,
**characterized in that**
the decomposition of the cold casting mold (100) is carried out thermally under oxygen-free conditions, in particular pyrolytically, or thermochemically with the supply of oxygen, in particular by combustion.

14. The method as claimed in any one of the preceding claims,
**characterized in that**
the cold casting mold (100), in particular the walls (120) of the cold casting mold (100) delimiting the cavity (110), is coated using a coating agent (220) before the filling with the mixing compound (200) in order to avoid a frictional and/or materially-bonded connection between the cold casting mold (100) and the mixing compound (200).

## Revendications

1. Procédé de fabrication de pièces moulées (210), notamment de pièces moulées (210) dentaires à partir d'une masse de mélange frittable (200), en utilisant un moule de coulée à froid (100) avec une cavité (110) correspondant géométriquement à la pièce moulée, notamment à la pièce moulée dentaire (210), et au moins une première ouverture (111) débouchant dans la cavité (110) et/ou menant hors de la cavité (110), avec les étapes de procédé suivantes :
(1) la fabrication du moule de coulée à froid (100) au moyen d'un procédé de construction de matériau additif, notamment d'un procédé d'impression 3D en utilisant une imprimante 3D (300), à partir d'un matériau de départ (150), la cavité (110) étant créée à l'aide d'un ensemble de données numériques, notamment sur la base d'un modèle spatial de la cavité buccale d'un patient,
(2) le remplissage de la cavité (110) du moule de coulée à froid (100) par l'intermédiaire de l'au moins une première ouverture (111) avec la masse de mélange frittable (200),
(3) le durcissement et/ou la solidification de la masse de mélange frittable (200) dans la cavité (110) du moule de coulée à froid (100),
**caractérisé en ce que** le moule de coulée à froid comprend au moins une deuxième ouverture (112) débouchant dans la cavité (110) et/ou menant hors de la cavité (110), des gaz et/ou des liquides contenus et/ou inclus dans la masse de mélange frittable (200) étant évacués de la cavité (110) par l'intermédiaire de l'au moins une deuxième ouverture (112), notamment pendant les étapes (2) et (3),
(4) la décomposition thermique et/ou thermochimique du moule de coulée à froid (100) à une température dans une plage de température allant de 200 °C à 2 500 °C,
(5) le frittage de la masse de mélange frittable (200) jusqu'à la dureté finale à une température dans une plage de température allant de 900 °C à 2 500 °C, jusqu'à l'obtention d'une pièce moulée (210), notamment une pièce moulée (210) dentaire, telle qu'une prothèse dentaire.

2. Procédé selon la revendication 1, **caractérisé en ce que** la masse de mélange (200) se présente sous la forme d'une barbotine et/ou d'une masse pâteuse et comprend un diluant (205), notamment de l'eau, la masse de mélange (200) durcissant et/ou se solidifiant par séchage dans la cavité (110) du moule de coulée à froid (100) et une partie liquide et/ou une teneur en humidité de la masse de mélange (200) étant évacuée du moule de coulée à froid (100) au moyen de l'au moins une ouverture (111, 112), notamment extraite de la masse de mélange (200).

3. Procédé selon l'une quelconque des revendications précédentes, **caractérisé en ce qu'**au moins une paroi (120) du moule de coulée à froid (100) délimitant la cavité (110) est construite de manière additive, entièrement ou par zones, avec une pluralité de deuxièmes ouvertures (112) débouchant dans la cavité (110) et/ou menant hors de la cavité (110) et traversant cette paroi (120), pour évacuer des gaz, notamment des inclusions d'air (208) et/ou des liquides, notamment des diluants (205).

4. Procédé selon l'une quelconque des revendications précédentes, **caractérisé en ce que** la masse de mélange (200) durcit et/ou se solidifie sous l'effet de chaleur dans la cavité (110) du moule de coulée à froid (100), le moule de coulée à froid (100) rempli de la masse de mélange (200) étant placé dans une armoire de séchage, une armoire climatique ou un four de frittage et une température dans une plage de température allant de 30 °C à 120 °C, et/ou une humidité de l'air dans une plage de 1 % à 50 % étant réglée.

5. Procédé selon l'une quelconque des revendications précédentes, **caractérisé en ce que** l'ensemble de données numériques, basé notamment sur un modèle spatial de la cavité buccale d'un patient, pour la configuration géométrique de la cavité (110) du moule de coulée à froid (100) comprend un retrait volumétrique de la masse de mélange (200) dû au frittage et/ou au durcissement.

6. Procédé selon l'une quelconque des revendications précédentes, **caractérisé en ce que**, pour la construction additive du moule de coulée à froid (100), on utilise en tant que matériau de départ (150) un matériau organique, notamment un polymère organique et/ou une cire et/ou une matière plastique, de préférence avec un point de fusion ou une température de décomposition dans une plage de température allant de 40 °C à 300 °C, de telle sorte que le moule de coulée à froid (100) est plastifiable et/ou décomposable thermiquement ou thermochimiquement.

7. Procédé selon l'une quelconque des revendications précédentes, **caractérisé en ce que** la masse de mélange (200) comprend une poudre de métal (209), notamment une poudre de CrCo, ou une poudre de céramique (209), notamment une poudre d'aluminium et/ou une poudre d'oxyde de zirconium et/ou une poudre de vitrocéramique, notamment une poudre de disilicate de lithium, et un liant (206).

8. Procédé selon la revendication 7, **caractérisé en ce que** le point de fusion et/ou la température de décomposition du moule de coulée à froid (100) est inférieur (e) au point de fusion ou à la température de décomposition du liant (206).

9. Procédé selon l'une quelconque des revendications précédentes, **caractérisé en ce que** la masse de mélange (200) est durcie à l'état vert dans la cavité (110) du moule de coulée à froid (100) avant que la décomposition du moule de coulée à froid (100) ne soit initiée ou entièrement réalisée.

10. Procédé selon l'une quelconque des revendications précédentes, **caractérisé en ce que** la décomposition du moule de coulée à froid (100) est initiée ou entièrement réalisée sous l'effet de chaleur à une température dans une plage de température allant de 200 °C à 650 °C, avant que la masse de mélange (200) ne soit frittée jusqu'à la dureté finale.

11. Procédé selon l'une quelconque des revendications précédentes, **caractérisé en ce que** le point de fusion et/ou la température de décomposition du moule de coulée à froid (100) est inférieur(e) à la température de frittage de la masse de mélange (200), notamment de la poudre métallique (209) ou de la poudre céramique (209) .

12. Procédé selon l'une quelconque des revendications précédentes, **caractérisé en ce que** la décomposition thermique et/ou thermochimique du moule de coulée à froid (100) est réalisée dans un four de frittage, le moule de coulée à froid (100) étant placé dans le four de frittage conjointement avec la masse de mélange (200) qui s'y trouve.

13. Procédé selon l'une quelconque des revendications précédentes, **caractérisé en ce que** la décomposition du moule de coulée à froid (100) est réalisée dans des conditions exemptes d'oxygène par voie thermique, notamment par pyrolyse, ou par voie thermochimique avec apport d'oxygène, notamment par combustion.

14. Procédé selon l'une quelconque des revendications précédentes, **caractérisé en ce que** le moule de coulée à froid (100), notamment les parois (120) du moule de coulée à froid (100) délimitant la cavité (110), est revêtu d'un agent de revêtement (220) avant le remplissage avec la masse de mélange (200), afin d'éviter une liaison par friction et/ou par matière entre le moule de coulée à froid (100) et la masse de mélange (200).
